# EUROPEAN PATENT SPECIFICATION

(11) **EP 0 164 830 B1**
(45) Date of publication and mention of the grant of the patent: **13.01.1993**
(21) Application number: 85302174.9
(22) Date of filing: 28.03.1985
(51) Int. Cl.: C04B 37/00, C04B 35/65, C04B 35/58, C25C 3/08, B32B 18/00

(54) **Reaction bonded carbide, nitride, boride, silicide or sulfide bodies**
Reaktionsgebundene Carbid-, Nitrid-, Borid-, Silicid- oder Sulfid-Formkörper
Corps en carbure, nitrure, borure, siliciure ou sulfure liés par réaction

(30) Priority: 13.06.1984 US 620034
(43) Date of publication of application: 18.12.1985
(73) Proprietor: Corning Glass Works, Corning New York 14831 (US)
(72) Inventor: Manfredo, Louis John, New York 14870 (US)
(74) Representative: Smith, Sydney

(56) References cited:
- EP-A- 0 115 177
- EP-A- 0 115 688
- EP-A- 0 115 689
- US-A- 3 261 701
- US-A- 3 353 954
- US-A- 3 607 613
- US-A- 3 657 592

## Description

The present invention relates to reaction bonded carbide, nitride, boride, silicide or sulfide bodies.

The present application is related to the following European Patent Applications:
833O7832.2 (EP-A-O115688)
833O7833.O (EP-A-O115689)
833O7834.8 (EP-A-O115177).
The disclosure of these applications is herein incorporated by reference.

The present invention relates generally to the field of joining solid bodies, at least one of which is composed at least partially of a carbide, nitride, boride, silicide or sulfide of elements in groups 2a, 3a, 4a, 2b, 3b (including the lanthanide and actinide series) 4b, 5b, 6b, 7b and 8 of the Periodic Table as set forth in the Handbook of Chemistry and Physics, 47th edition, 1966-67.

Such solid bodies may be cermet bodies which have first phase or phases of non-oxide ceramic compound and a second phase or phases of metal, alloy and/or intermetallic compound. The non-oxide ceramic compounds are the aforementioned boride, carbide, nitride, silicide, and sulfide compounds, or combinations thereof. The combinations of these compounds can be either two discrete phases (e.g. a boride and a carbide) or a single complex phase (e.g. a borocarbide). Cermet bodies of this type are disclosed in the related EP-A-O115688. In this patent application certain novel, very tough and hard, reaction sintered cermet bodies (and methods for forming same) are disclosed. These cermet bodies are reaction sintered, multiple phases of a fine grained homogenous, intimate interdispersions of selected borides, nitrides, carbides, silicides or sulfides and selected metals, alloys or intermetallic compounds.

Such cermet bodies may also be made by mixing, shaping and heating particulate refractory metal boride with either powder or molten aluminum metal or alloy to yield solid cermet bodies of the same boride and metal or alloy phases. See U.S. Patent No. 3,O37,857. It has also been known to cold press titanium diboride powder to form a porous body which is impregnated with molten aluminum. See U.S. Patent 3,274,O93. Belgium Patent No. 644,O66, U.S. Patent 3,178,8O7 and U.S. Patent 3,459,515 disclose mixing, explosively compacting and heating particulate mixtures of aluminum and certain carbide and/or boride to yield bodies of essentially the same aluminum and carbide and/or boride phases. U.S. Patent 3,328,28O discloses mixing and, either simultaneously or sequentially, pressing and heating particulate mixtures of aluminum nitride and titanium diboride and/or aluminum.

The present invention also relates to the field of joining solid bodies, at least one of which is an oxide-boride ceramic body which can have one or more oxide phases and one or more boride phases. Such oxide-borides ceramic bodies are disclosed in the related EP-A-O115689. In this related patent application, novel reaction sintered ceramic bodies, and methods of forming same, are disclosed which are prepared by reaction sintering fine-grain homogenous intimate interdispersions of selected boride and oxide phases.

Such oxide-boride ceramic bodies are of the type physically formed of ingredients corresponding to the crystalline phases in the ceramic bodies. For example, U.S. Patent 2,27O,6O7 discloses mixing, shaping and sintering at least 1O weight % of oxides of Al, Zr, Be and/or Th with borides of W, Fe and the like, to yield ceramic bodies of those same phases. U.S. Patent 3,O67,146 discloses hot pressing or shaping of sintering of mixtures of TiB₂, Al₂0₃, and Cr₂0₃ to form ceramic bodies of substantially those same phases. U.S. Patent 3,296,OO2 discloses firing porous shaped mixtures of aluminum and alloys thereof with borides of Cr, Mo, Ti, W and Zr in an oxidizing atmosphere to form porous alumina-boride ceramics. U.S. Patent 4,O22,584 discloses hot pressed or shaped and sintered mixtures of Al₂0₃ MgO and borides of metals from groups 4b, 5b and 6b to provide ceramic bodies of substantially those same phases. U.S. Patent 4,11O,26O discloses sintering shaped mixtures of a wide variety of ingredients including insulating ceramics such as aluminum and zirconia and electroconductive substances such as borides of Ti and Zr. U.S. Patent 4,343,909 discloses sintering pressed mixtures of Al₂0₃, ZrO₂, TiB₂ and grain growth inhibitor to yield a product of substantially those same phases.

The present invention also relates to the joining of solid bodies, at least one of which is a ceramic body which has one or more nitride phases of Al and/or Si plus one or more phases of boride, carbide, silicide and/or sulfide of groups 3b, 4b, 5b and 6b. A combination of the latter compounds can be either two discrete phases or a single complex phase. Bodies of this type are disclosed in the related EP-A-O115177. In this related patent application a novel reaction sintered ceramic body and method of forming it, are disclosed which is prepared by reaction sintering a fine grained homogeneous, intimate interdispersion of a nitride phase or phases and a boride, carbide, silicide, sulfide phase or phases of one or more of the elements of groups 3b including lanthanide and actinide series elements, 4b, 5b, and 6b to produce a body containing less than 4 weight % oxygen.

Such ceramic bodies include the type physically formed of ingredients corresponding to the crystalline phases in the ceramic bodies. For example, U.S. Patent 3,1O8,887 discloses hot pressed particulate mixtures of AlN with other compounds, among which are mentioned the compounds MX where M is different from X and is selected from aluminum, boron, silicon, rare earth metals, titanium, zirconium, hafnium, thorium, vanadium, columbium (niobium) tantalum, protactinium, chromium, molybdenum and uranium (although no example is given of any of these MX compounds). UK patent specification 954,272 discloses bodies either sintered or hot pressed, of particulate mixtures of AlN with a boride of titanium, zirconium, chromium or molybdenum U.S. Patents 3,251,7OO and 3,328,28O disclose hot pressed or sintered particulate mixtures of TiB₂ and AlN. In this regard, please also refer to U.S. Patent 3, 143,413 which discloses reaction hot pressed ceramic with phases of ZrN and either ThS, VaC or ZrC which are prepared through an unusual reaction hot pressing process involving passage of electric current through the reaction mixture during the process.

Typically, the aforementioned bodies, when composed even partially of carbides, nitrides or borides, are difficult to join to each other or to other materials such as metals or oxides, because they do not easily sinter and are easily oxidized. Further, many of these bodies are brittle, and, when joined to bodies of differing coefficients of thermal expansion, are subject to fracture during thermal stress. Even in those cases where joints of suitable mechanical integrity are achieved, the electrical characteristics of such joints may be undesirable.

Numerous methods have been disclosed for joining various nitride, carbide, boride, silicide and/or sulfide bodies. In Chemical Abstracts, No. 84:1259O6r (1976), a process is disclosed for repairing cracked silicon nitride artifacts by filling the crack with a mixture of powdered Si in a plasticized binder, then nitriding. In Chemical Abstracts, No. 94:144214m (1981), a method is disclosed of joining special ceramics to refractory metallic components using adhesive materials made from ceramics (Si₃N₄, SiC) and refractory metals (MoTW, Cr, Ni) manufactured by high vacuum solid state bonding. In Chemical Abstracts, No. 92:982O4s (1980), the joining of carbide and carbide-graphite articles with cellular porous structures is disclosed using a joint area treatment with a metal melt containing a carbide-forming component, which is then heat treated. In Chemical Abstracts, No. 81:53649x (1974), exothermically reactive materials, particularly stoichiometric and non-stoichiometric mixtures of Sn and Te are disclosed as reacting to form metallurgical and chemical bonds between components. The exothermic generation of heat is disclosed as providing the energy by which the metallurgic joining is done, which method is said to be particularly useful in the technology of producing thermoelectric couples for thermoelectric generators. At Chemical Abstracts, No.71:32872p (1969), relating to U.S. Patent 3,48O,492, adhesives containing additives that undergo exothermic reactions are disclosed which are activated by ultrasonic energy, which heats the adhesive and initiates the exothermic reaction. The exotherm promotes adhesion by increasing the wetting action of the adhesive and causing nonpolar surfaces to become polar. At Chemical Abstracts, No. 71:33O4Og (1969) a vacuum hot press diffusion bonding method is disclosed for joining refractory metal compounds to each other and to oxide ceramics. Joints were made of ZrC to ZrB₂, ZrN to ZrB₂, ZrC to ZrN, and ZrC, ZrN, and ZrB₂ to Al₂0₃. Each of the disclosed joints contained a layer comprising 50 weight % of each of the two end compounds. This layer, sandwiched between each end compound, enhanced bonding and smoothed out the thermal expansion gradient between the two end members. Also included in these joining tests was one each of TiC to TiB₂, TiC to TiN, TiB₂ to TiN, and TiC to ZrB₂ joints.

Various bonding methods are also disclosed in the patent literature. Please refer to Japanese 57,179,O82; British 2O91763A; USSR 700,299; British 1,417,169; U.S. 3,8O8,67O; U.S. 3,628,233; U.S. 3,367,811; British 1,O47,421; U.S. 3,372,732; and U.S. 3,O2O,632. Also please refer to Roettenbacher et al, DVS Ber., 66:108-12 (1981); Muller-Zell et al, Energy Res. Abstr. 1980, 5(17), Abstract No.275OO; J.E. Kelly et al, Nucl. Sci. Abstr. 1969, 23(7), 12391.

Finally, in US-A-3,261,7O1 there is disclosed a composition of matter having as essential constituents aluminum nitride and aluminum boride. In an example, there is disclosed the bonding of refractory tubes of the composition of the invention utilizing a paste made up of aluminum, boron nitride powder and boric oxide wetted with a sufficient quantity of ethylene diamine to provide a smooth paste.

In US-A-3,607,613 there is disclosed an electrically conductive refractory body which is formed by joining at least two such smaller bodies. A thin layer of refractory body is applied to the interface between the two bodies which are then heated under pressure. The smaller bodies can be formed of an admixture of AlN, BN and TiB₂ and the refractory powder can be a transition metal boride, carbide or nitride.

In US-A-3,353,954 there is disclosed a process for producing seals between two or more metal ceramic bodies, between ceramic and metal bodies and between two or more metal bodies. The process is a reaction-pressing process which includes the steps of thoroughly mixing together elements or compounds capable of reacting to form one or more compounds of the intermetallic type and forming such compounds by subjecting the elements or compounds to conditions of heat and pressure to form such intermetallic-type compounds. Compounds of the intermetallic-type which are referred to include silicides, borides, aluminides, titanides, zirconides, antimonides, germanides and beryllides.

There remains a continuing need for methods of joining solid carbide, boride, nitride, silicide or sulfide bodies to produce joined products exhibiting good mechanical, thermal and electrical properties, and which can facilitate the easy and economical fabrication of those bodies into a variety of shapes and sizes by heating at relatively low temperatures. It may be difficult, for example, to use any given fabrication procedure to form bodies which vary greatly in size and/or volume. It may also be difficult using such procedures to form bodies having the desired complexity of shape. Accordingly, a need exists for a simple and economical joining method which will reduce or overcome such difficulties.

It is an object of this invention to provide a method of joining solid carbide, boride, nitride, silicide or sulfide bodies, and the joined products of those methods, which substantially overcomes the aforesaid limitations of the prior art and enables the practical attainment of greater technical and economic ease in the flexibility of fabricating such bodies with specifically tailored and improved properties as noted herein.

It is also an object of this invention to provide certain advantageous product features as detailed hereinafter.

The invention is characterized by the discovery that certain difficult-to-join solid carbide, boride, nitride, silicide or sulfide bodies can be joined using an intermixture of selected precursors which are reacted exothermically to provide a strong, electrically continuous joint.

The method of this invention comprises providing an intermixture of solid precursors capable of reacting exothermically, said precursors being selected to yield an exothermic reaction product selected from the group consisting of:
(1) the product consisting essentially of:
   (a) 30-95 mole % of at least a carbide, nitride, sulfide, or a combination thereof of one or more of elements of groups 2a, 3a exclusive of B, 4a, 2b, 3b, including lanthanide and actinide series element, 4b, 5b, 6b, 7b and 8; and
   (b) 5-70 mole % of a second phase(s) of metal alloy, or combination thereof, of one or more of the elements of groups 3a exclusive of B, 4a, 1b, 2b, 4b, 5b, 6b, 7b and 8; and
   (c) said joint containing less than about 4 weight % oxygen;
(2) the product consisting essentially of:
   (a) 10-90 mole % of boride phase or phases, being boride of one or more of the elements of groups 3b including lanthanide and actinide series elements, 4b, 5b and 6b; and
   (b) 10-90 mole % of oxide phase or phases, being oxide of one or more of the elements of groups 3a, 4a, 3b, 4b, 5b, 6b and 8; and
(3) the product consisting essentially of:
   (a) 5-95 mole % of nitride phase or phases, being nitride of one or both of Al and Si; and
   (b) 5-95 mole % of a second phase or phases, being boride, carbide, silicide, sulfide or a combination thereof, of one or more of the elements of groups 3b, including lanthanide and actinide series elements, 4b, 5b and 6b;
   (c) and said joint containing less than about 4 weight % oxygen;
pressing that mixture of precursors between portions of the aforementioned solid bodies to be joined to form an intermediate laminate; and heating that laminate in the absence of atmospheric reactants to a heat sufficient to initiate an exothermic reaction which joins said solid bodies.

Preferably, the joining method of this invention is performed by disposing a layer of reactive mixture between precleaned opposing surfaces of the bodies to be joined. The, thus-formed laminate is then subjected to a pressure of at least 35, preferably 140-142, kg/cm², whereupon heating to no more than about 16OO°C is performed, either in a vacuum or an inert atmosphere. In certain of the herein-disclosed embodiments, hydrogen is released and removed from the laminate during this heating process, prior to the initiation of the exothermic reaction which forms the join. The present methods are particularly useful for bonding pieces of reaction hot pressed TiB₂/Al composites at relatively low temperatures. These methods utilize the large amounts of energy which are released when the highly stable boride is formed. In accordance with one preferred method, an intermixture of calcined TiH₂ and AlB₂ precursors is disposed between pieces of TiB₂/Al composite, the assembly is located into a hot press, pressure is applied, and the assembly is heated in vacuum. At about 1OOO°C the Ti and AlB₂ react to form TiB₂ and Al. The temperature of the joint rises abruptly many hundreds of degrees and under the influence of the locally high temperature and pressure, a strong and electrically continuous bond is formed without raising the furnace temperature above about 1OOO°C.

Of course, reaction temperature is governed by the particular reactants and their identified reaction temperature at whatever pressure is selected for performing the heating step.

Further objects and embodiments of the present invention will become apparent from the following more-detailed description.

The present invention provides a novel method for joining solid carbide, boride, nitride, silicide, or sulfide bodies. In accordance with this invention, one of the bodies to be joined is a difficult to join boride, carbide, nitride, silicide or sulfide. In particular, this first body consists essentially of 5 to 1OO molar percent of first phase or phases selected from the group consisting of a boride, carbide, nitride, silicide or sulfide, or combinations thereof, of elements in groups 2a, 3a, 4a, 2b, 3b, including the lanthanide and actinides series, 4b, 5b, 6b, 7b and 8; and O-95 molar percent of second phase or phases of metal, alloy, intermetallic compound, oxide or mixtures thereof. This first solid body may be joined to a second solid body consisting essentially of material with phase or phases selected from the group consisting of boride, oxide, carbide, nitride, silicide, or sulfide, or combinations thereof, of elements in the groups 2a, 3a, 4a, 2b, 3b, including the lanthanide and actinide series, 4b, 5b, 6b, 7b, and 8, a metal, an alloy, and intermetallic material, or carbon, or combinations thereof.

The aforementioned first and second solid bodies may be joined or bonded by providing an intermixture of precursors capable of reacting exothermically. Those of ordinary skill in the art will recognize that such exothermic reactions may result in a reaction sintering of the subject precursors, and a resultant bonding of those precursors to adjacent materials as a result of a reaction which has a substantial negative heat of formation as its driving force. The products or bodies formed, therefore, must have a lowered free energy of formation than the reactants from which they were prepared. The elements of the groups of the Periodic Table as described herein, are selected for use as precursors so as to conform to these principles. In particular, such precursors are selected to yield an exothermic reaction product as described herein.

More particularly, in the following listing of molar reactions, suitable precursors are listed on the left, and their resultant exothermic reaction products on the right (except in the case of H₂ or O₂ which are removed as gases) :

Ti + AlB₂ → TiB₂ + Al

TiH₂ + AlB + B → TiB₂ + Al + H₂

3 TiH₂ + AlB₂ + O.3AlB₁₂ → 3TiB₂ + 1.3Al + 3H₂

3TiH₂ + 7Al + 6B → 3TiB₂ + 7Al + 3H₂

3TiH₂ + 3AlB₂ + 4Al → 3TiB₂ + 7Al + 3H₂

NbH₂ + AlB₂ → NbB₂ + Al + H₂

Cr + AlB₂ → CrB₂ + Al

Fe₂B + 4TiH₂ + 7B → 4TiB₂ + 2Fe + 4H₂

2WB + TiC → TiB₂ + WC + W

2Co₂B + TiH₂ → TiB₂ + 4Co + H₂

FeB + Ni → NiB + Fe

ZrH₂ + PtB₂ → ZrB₂ + Pt + H₂

2Fe₂B + U → UB₂ + 4Fe

Al₄C₃ + 7Ti → 3TiC + 4TiAl

NiC + Hf → HfC + Ni

Si + VC → SiC + V

Al + 2BN + 4TI → TiB₂ + 2TiN + TiAl

TiN + Al → AlN + Ti

Cr₂N + Ta → TaN + 2Cr

AlSi₂ + Ti → TiSi₂ + Al

TiAl + 2B → TiB₂ + Al

ZrH₂ + AlB₂ → ZrB₂ + Al + H₂

TaSi₂ + Ti → TiSi₂ + Ta

CoSi₂ + Th → ThSi₂ + Co

Al₂S₃ + 3Ce → 3CeS + 2Al

3 MnS + 2Al → Al₂S₃ + 3Mn

FeS + Mn → MnS + Fe

1.5 PbS₂ + 2Al → Al₂S₃ + 1.5 Pb

CuS + Zn → ZnS + Cu

ZnS + Ba → BaS + Zn

3TiO₂ + 4Al + 6B → 3TiB₂ + 2Al₂0₃

2Al + B₂0₃ + TiH₂ → Al₂0₃ + TiB₂ + H₂

TiAl₂ + B₂0₃ → TiB₂ + Al₂0₃

2 ZrO₂ + 2AlB₂ → 2ZrB₂ + Al₂0₃ + 0.5 O₂

HfO₂ + 2NiB → HfB₂ + 2NiO

SiB₄ + Cr₂0₃ → 2CrB₂ + SiO₂ + 0.5 O₂

La₂0₃ + 3 NiB + 9B → 2LaB6 + 3 NiO

TiO₂ + Zr + 2B → ZrO₂ + TiB₂

CrO₃ + CeB₂ → CeO₂ + CrB₂ + 0.5 O₂

ZrO₂ + MoB₂ → ZrB₂ + MoO₂

HfO₂ + Pb + 2B → HfB₂ + PbO₂

Nb₂0₅ + 2AlB₂ + Al → 2NbB₂ + 1.5 Al₂0₃ + 0.25 O₂

ThO₂ + VB₂ → VO₂ + ThB₂

Cr₂0₃ + 2AlbB₂ → 2CrB₂ + Al₂0₃

6TiO₂ + AlB₁₂ + 7Al → 6TiB₂ + 4Al₂0₃

2AlB₂ + 2TiO₂ → 2TiB₂ + Al₂0₃ + O.5 O₂

2AlB₂ + 2TiO₂ + xAl₂0₃ (diluent)→ 2TiB₂ + (1 + x) Al₂0₃ + 0.5 O₂ (gas)

3TiO₂ + 3B₂0₃ + 1OAl → 5Al₂0₃ + 3TiB₂

AlB₂ + TiN → TiB₂ + Al N

AlB₂ + LaN + 4B → AlN + LaB₆

AlB₂ + TaN → AlN + TaB₂

AlB₂ + MoN → AlN + MoB₂

4Al + 2BN + CrN₂ → 4AlN + CrB₂

Al + C + MoN → AlN + MoC

3SiC + 4WN + C → Si₃N4 + 4WC

AlSi₂ + TiN → AlN + TiSi₂

Al + 4Si + Ti₂N → AlN + 2TiSi₂

TiAl + BN + B → TiB₂ + AlN

3TiSi₂ + 8BN + TiH₂ → 4TiB₂ + 2Si₃N4 + H₂

3TiN + Al4C₃ → 3TiC + 3AlN + Al

Al + 2Si + MoN → AlN + MoSi₂

4LaN + 11 Si → Si₃N₄ + 4LaSi₂

4NbN + 11 Si → Si₃N₄ + 4 NbSi₂

Al₂S₃ + 2CeN + Ce → 2AlN + 3CeS

Al₂S₃ + 3 CeN → 2AlN + 3CeS + O.5 N₂

Al₂S₃ + 3CeN + Al → 3AlN + 3 CeS

Al₂S₃ + 3TaN + Al → 3AlN + 3 TaS

2Al₂S₃ + 2CrN₂ + Cr → 4AlN + 3CrS₂

8S + 3 Si + 4TiN → Si₃N₄ + 4 TiS₂

The joining method of the present invention is performed by laminating, and preferably pressing, a mixture of the above-identified precursors between portions of said solid bodies to be joined to form an intermediate laminate. It is presently preferred to clean the opposing surfaces of said bodies to be joined prior to this pressing step. For example, cleaning may be effected by sandblasting and grinding flats with a silicon carbide abrasive, followed by ultrasonic cleaning in alcohol and drying. The thickness of the precursors layer to be disposed between the surfaces to be joined should be selected in view of the surface area of the joint, the thermal characteristics of each of the bodies to be joined, the intended end use, the exothermic characteristics of the particular precursors employed, and the composition of each of the bodies to be joined. As shown in the following examples, layers of precursor powders approximately 1/8" thick (about 0.3 cm) has been found suitable for the indicated conditions.

Once the intermediate laminate has been formed, the laminate should be heated in the absence of atmospheric reactants to heat sufficient to initiate an exothermic reaction which joins the solid body. This heating step may be performed in an inert atmosphere such as argon, or more preferably may be performed in a vacuum. Performance of the joining process in a vacuum is particularly desirable when oxygen or hydrogen gas is released from one of the precursors prior to or during the exothermic reaction.

In choosing particulate reactants which are useful for joining the subject solid bodies, the physical and chemical compatibility between the resultant exothermic reaction product and those bodies should be considered. For example, a joining reaction which results in a free aluminum metal phase may not be compatible with an oxide which can be reduced by aluminum, a silicate. Some chemical reaction with the parts to be bonded is desirable, however, to form a strong bond. A particularly important physical consideration is the difference in thermal expansion between the first and second solid bodies to be joined, and between the joint material. Severe mismatches in thermal expansion may cause stresses that will fracture the joint. On the other hand, by judicious choice of a bonding reaction, an expansion mismatch between the solid bodies to be joined may be buffered. For example, the coefficient of thermal expansion of polycrystalline alpha alumina is about 80 X 1O⁻⁷/°C over the range of 25°C to 1OOO°C. The coefficient for polycrystalline TiB₂ for the range of 25°C to 1OOO°C is 90 X 1O⁻⁷/°C. A particularly good joining reaction for solid bodies composed of the aforementioned materials would therefore be:

3AlB₂ + 3TiO₂ + Al = 3TiB₂ + Al₂0₃.

The resultant joint thus should provide a compositionly graded buffer to minimize the stresses caused by the thermal expansion mismatch. A superior joint can also be obtained when the elemental composition of the first and second solid bodies, and that of the exothermic reaction products, are the same.

Generally, the particulate precursor reactants are mixed in accordance with the above-identified molar formulas in stoichiometric proportions to form the desired exothermic reaction products. However, non-stoichiometric proportions may be used in order to vary the properties of the joint or to control the reaction process. Powdered diluent material may also be added during the formation of either of the bodies to be joined, or to the precursors which result in the joint itself. The diluent may be or contain one of the elements of the reactants or may be the same as one of the reaction-produced phases in the products, or may be other suitable material, any of which may be used to control the reaction sintering or properties of the resultant product. The amount of diluent or diluents must be less than the amount which would interfere in the achievement of a suitable bond between the first and second bodies.

The precursors can be mixed or blended in any suitable manner known to those skilled in ceramic technology for yielding an intimate, homogenous mixture of reactant particles, e.g. by ball milling in dry or wet condition. For very dense joint or bond, a high pressure pressing procedure, including hot isotactic pressing, may be employed. The mixed precursor reactants may be charged into a mold, and, if desired, may be given pretreatment such as dehydration, degassing or burn-out of binder, provided the pretreatment temperature is kept below the temperature which initiates the exothermic reaction. It is advantageous to precompact the precursor reactant mixture at room temperature and at 5O-1OO% hot pressing pressure to ensure a uniform compacted layer of precursor reactants which may be easily interposed between adjacent surfaces of the solid bodies to be joined.

The pressing step of the present invention may be preformed in a mold comprising, for example, an annular die with upper and lower plungers. The mold can be of any material not adversely reactive with the solid parts to be joined and with the precursor reaction mixture, and that can withstand pressures up to 15,OOO psi (about 1O55 kg/cm²) or more. Graphite molds have been found very suitable for pressures up to 1O,OOO psi (about 7OO kg/cm²). Preferably, the pressing step of the present invention is initiated prior to beginning heating to initiate the exothermic joining reaction. A moderate vacuum (eg about 1 X 1O⁻⁴ TORR) is satisfactory for making the joints of the present invention. However, as mentioned above, an inert gas atmosphere may be employed for the same purpose of protecting the reactants and the mold from adverse air oxydation. As necessary, pressing should be increased to full load during heating, or at the maximum hot pressing temperature. To assure a good join, full pressure should be at least 2,OOO psi (about 14O kg/cm²).

Heating can be done in any suitable hot pressing furnace, such as an induction heating furnace or electric resistance heating furnace used to make samples of the invention, which provides very rapid heat up. Heating rates satisfactorily employ ranges from about 30° per minute during the initial phase of heating to about 7° per minute as the exotherm initiation temperature is approached. Slower heating rates are preferably used with reactant mixtures evolving gas, such as hydrogen, which is drawn off by the vacuum system prior to initiation of the exotherm. Heating progresses to a temperature at which the reaction sintering is initiated and a suitable joint is formed. That event is marked by a rapid temperature rise in the mold due to exothermic heat evolution from the reaction. When the maximum temperature and pressure for the reaction hot pressing of the joint are attained, they are usually held for some short period to a short complete reaction sintering, the length of which is dependent upon the size and volume of the joint to be obtained. Thereafter, the molds containing the samples are cooled in the furnace under protective atmosphere and the pressure is held on the samples until they are cooled to a suitable solidification temperature. The molds are removed from the furnace and the samples are then pressed out of the mold body.

The preferred method of the present invention relates to bonding together pieces of reaction hot pressed TiB₂/Al composite at relatively low temperature. This method utilizes the large amount of energy which is released when the highly stable boride is formed. Specifically, the method comprises sandwiching between the bodies to bonded, a powder of the precursor TiH₂ plus AlB₂ to form a laminated assembly. This assembly is loaded into a hot press, pressure is applied and the assembly is heated in a vacuum. As the furnace warms, the TiH₂ decomposes and H₂ gas is pumped away, in accordance with the following molar formula:

TiH₂ + AlB₂ = TiAl + 2B + H₂ (65O°C) (1)

The reaction represented by equation (1) is mildly exothermic but not sufficiently so to form a bond. The second reaction set forth in the following molar formula causes the join because it is highly exothermic and the in situ nature of the reaction promotes reactivity and bonding:

TiAl + 2B = TiB₂ + Al (at about 11OO°C) (2)

Therefore, at temperatures above about 1,OOO° - 1,1OO°C, the temperature of the joint rises abruptly many hundreds of degrees, and under the influence of the locally high temperature and the pressure, a strong and electrically continuous bond is formed without raising the furnace temperature above about 1,OOO°C.

A second less preferred class of reactions are those which give off gases during the joining reaction. An example of such a reaction is as follows:

4TiO₂ + 4AlB₂ = 4TiB₂ + 2Al₂0₃ + O₂

The present invention thus provides a joined body comprising first and second body portions, as described above, and a joint disposed between those first and second body portions comprising an exothermic reaction product comprising at least 5 to 1OO mole % of a first reaction product phase or phases boride, carbide, nitride, silicide, sulfide or combinations thereof, of elements of the groups 2a, 3a, 4a, 2b, 3b, including the lanthanide and actinide series, 4b, 5b, 6b, 7b and 8, and O-95 mole percent of a second reaction product phase or phases of metal, intermetallic compound, alloy, oxide, or combinations thereof. More particularly, the exothermic reaction product comprising said joint may consist essentially of 3O-95 mole % of those materials and 5 to 7O mole % of a second phase(s) of metal, alloy, intermetallic compound, or combination thereof, of one or more of the elements of groups 3a exclusive of B, 4a, 1b, 2b, 4b, 5b, 6b, 7b and 8, and comprising less than 4 weight % oxygen. Alternatively, the exothermic reaction product of said joint may consist essentially of 1O to 90 mole % of boride phase or phases, being boride of one or more of the elements of groups 3b including the lanthanide and actinide series elements, 4b, 5b and 6b, and 1O to 90 mole % of oxide phase or phases, being oxide of one or more of the elements of groups 3a, 4a, 3b, 4b, 5b, 6b and 8. Still as a further alternative, the exothermic reaction product of the joint may consist essentially of 5-95 mole % of a nitride phase or phases being nitride of one or both of Al and Si, and 5-95 mole % of a second phase or phases, being boride, carbide, silicide, sulfide, or a combination thereof, of one or more of the elements of groups 3b including the lanthanide and actinide series elements, 4b, 5b and 6b; said joint containing less than about 4 weight % oxygen.

The present invention is also particularly useful for joining a first body portion consisting essentially of polycrystalline TiB₂, and a second metallic body portion, such as a steel body portion, wherein the exothermic reaction product consists essentially of a boride, carbide, nitride or silicide of Ti, Al, Ni, or Fe, or a combination thereof. (The borides of those compounds being preferred). A further advantageous embodiment involves the joining of a polycrystalline TiB₂ first body to a silicon nitride second body with an exothermic reaction product joint consisting essentially of a silicide, boride, nitride or carbide of Ti, Si or B, or mixtures thereof.

The present invention may be further understood by reference to the following examples.

### Example 1

Two four inch (10.16cm) diameter by one inch (2.54 cms) thick disks of a reaction hot pressed TiB₂/Al composite were joined using the joint reactants of the equations (1) and (2) above. The TiH₂ and AlB₂ mixture was calcined to 65O°C to remove the hydrogen. The two pieces to be joined were identical and the joining reaction yielded a joint material which was chemically identical to the two pieces being joined.

The faces of the two pieces to be joined were sandblasted and ground flat with a SiC abrasive. The faces were ultrasonically cleaned in alcohol and the pieces were carefully dried. A layer of reactant powder 1/8" (O.317 cm) thick was sandwiched between the two pieces in a carbon mold. The reactant powder was a mixture of 1:1 molar ratio of TiH₂ and AlB₂ which has been calcined at 65O°C to remove the hydrogen. The mold was placed in a hot press. The press cavity was evacuated and 6,OOO psi (41.4 Bar) pressure was applied to the sandwich assembly. The temperature was raised at a rate of 30° per minute to 5OO°C and at 7° per minute to the exotherm initiation temperature. The exothermic reaction occurred at about 11OO°C after which the assembly was allowed to cool. The pressure was removed after the assembly had cooled to a temperature below the freezing point of aluminum.

This procedure yielded a well bonded assembly that was strong and electrically continuous. Bars of the material that contained the joint were broken in a bending test, and of the six samples tested none broke at the joint. Measurements of electrical resistivity at room temperature and at 1OOO°C indicate excellent electrical continuity across the joints. Samples with a join showed an average resistivity (micro ohm centimeter) of 14 at 25°C and 78 at 1OOO°C. This compared favorably to sample without a joint, which exhibited a resistivity of 10 at 25°C and 62 at 1OOO°C.

### Example 2

A four inch (1O.16 cm) diameter by one inch (2.54 cm) thick of reaction hot pressed TiB₂/Al composite was bonded to a one quarter inch (O.63 cm) thick, 4 inch (10.16 cm) diameter disk of the reaction hot pressed composite TiB₂/AlN. The reactant powder and the procedure was identical to that in Example 1. The two pieces were firmly bonded together. They have been placed in a corrosive environment of cryolite, aluminum and carbon at 1OOO°C in an electric field, and after three months the bond is still good. This example demonstrates the suitability of this invention for producing well bonded products composed of dissimilar boride composition.

The method and products of this invention are quite useful in a variety of applications. For example, by joining short segments of TiB₂/Al composite materials a long rod may be formed for use as an electric current collector in Hall-Heroult cell.

## Claims

1. A method of forming a joined, solid body comprising carbide, boride, nitride, silicide and/or sulfide, comprising the steps of:
(A) providing a first body portion consisting essentially of:
(1) 5 to 100 mole % of first phase or phases selected from the group consisting of: a boride, carbide, nitride, silicide or sulfide, or combinations thereof, of elements in groups 2a, 3a, 4a, 2b, 3b (including the lanthanide and actinide series), 4b, 5b, 6b, 7b and 8; and
(2) 0-95 mole % of second phase or phases of metal, intermetallic compound, alloy, or oxide, or combinations thereof;
(B) providing a second body portion consisting essentially of material with phase or phases selected from the group consisting of:
boride, oxide, carbide, nitride, silicide or sulfide, or combinations thereof, of elements in groups 2a, 3a, 4a, 2b, 3b (including the lanthanide and actinide series), 4b, 5b, 6b, 7b and 8; a metal, an alloy; an intermetallic compound; or carbon; or combinations thereof;
(C) providing an intermixture of solid precursors capable of reacting exothermically, said precursors being selected to yield a joint in situ between said first and second body portions comprising an exothermic reaction product selected from the group consisting of:
(1) the product consisting essentially of:
(a) 30-95 mole % of at least a carbide, nitride, sulfide, or a combination thereof of one or more of elements of groups 2a, 3a exclusive of B, 4a, 2b, 3b, including lanthanide and actinide series element, 4b, 5b, 6b, 7b and 8; and
(b) 5-70 mole % of a second phase(s) of metal, alloy, or combination thereof, of one or more of the elements of groups 3a exclusive of B, 4a, 1b, 2b, 4b, 5b, 6b, 7b and 8; and
(c) said joint containing less than about 4 weight % oxygen;
(2) the product consisting essentially of:
(a) 10-90 mole % of boride phase or phases, being boride of one or more of the elements of groups 3b including lanthanide and actinide series elements, 4b, 5b and 6b; and
(b) 10-90 mole % of oxide phase or phases, being oxide of one or more of the elements of groups 3a, 4a, 3b, 4b, 5b, 6b and 8; and
(3) the product consisting essentially of:
(a) 5-95 mole % of nitride phase or phases, being nitride of one or both of Al and Si; and
(b) 5-95 mole % of a second phase or phases, being boride, carbide, silicide, sulfide or a combination thereof, of one or more of the elements of groups 3b, including lanthanide and actinide series elements, 4b, 5b and 6b;
(c) and said joint containing less than about 4 weight % oxygen;
(D) laminating said mixture of precursors between portions of said solid bodies to be joined to form an intermediate laminate; and
(E) heating said laminate in the absence of atmospheric reactants to a heat sufficient to initiate an exothermic reaction that yields said joint in situ and joins said solid bodies.

2. A method as claimed in claim 1 characterised in that the heating step is performed in a vacuum.

3. A method as claimed in claim 1 characterised in that the heating step is performed in an inert atmosphere.

4. A method as claimed in any of claims 1 to 3 characterised in that step (D) comprises forming a joining layer of said mixture between opposing surfaces of said bodies.

5. A method as claimed in any of claims 1 to 4 characterised in that said opposing surfaces are cleaned prior to performing step (D).

6. A method as claimed in any of claims 1 to 5 characterised in that the laminating step comprises pressing said precursors between said bodies at pressures of at least 35 kg/cm², preferably at least 140 kg/cm² and in particular approximately 420 kg/cm².

7. A method as claimed in any of claims 1 to 6 characterised in that step (A) comprises providing a first solid body consisting essentially of a TiB₂/Al composite.

8. A method as claimed in any of claims 1 to 6 characterised in that step (A) comprises providing a polycrystalline TiB₂ first body, step (B) comprises providing a polycrystalline alpha alumina second body, and step (C) comprises providing a precursor mixture of boride, carbide, nitride, or silicide of Ti or Al, or mixtures thereof.

9. A method as claimed in claim 8 characterised in that said mixture of precursors consists essentially of A1, B and TiH₂ in about stoichiometric proportions.

10. A method as claimed in any of claims 1 to 9 characterised in that said first and second bodies are selected to consist of essentially the same phase or phases.

11. A method as claimed in any of claims 1 to 10 characterised in that the exothermic reaction product is selected to consist of essentially the same phase or phases as one of said bodies.

12. A method as claimed in claim 11 characterised in that said bodies and said reaction product are selected such that the reaction product consists of the phase or phases in both of said bodies.

13. A method as claimed in any of claims 1 to 6 characterised in that step (A) comprises providing a polycrystalline TiB₂ first body, step (B) comprises providing a metallic second body, and step (C) comprises providing a precursor mixture of boride, carbide, nitride or silicide of Ti, Al, Ni, or Fe, or mixtures thereof.

14. A method as claimed in claim 13 characterised in that step (B) comprises providing a steel second body.

15. A method as claimed in claim 13 characterised in that step (B) comprises providing an aluminum second body.

16. A method as claimed in any of claims 1 to 6 characterised in that step (C) comprises providing precursors selected from the group consisting of: hydride and boride of Ti, Ni, Fe or Al, or mixtures thereof.

17. A method as claimed in any of claims 1 to 6 characterised in that step (A) comprises providing a polycrystalline TiB₂ first body, step (B) comprises providing a silicon nitride second body, and step (C) comprises providing precursor mixture of silicide, boride, nitride, carbide or hydride of Ti, Si, or B or mixtures thereof.

## Patentansprüche

1. Verfahren zur Herstellung eines Verbund-Festkörpers, enthaltend Carbid, Borid, Nitrid, Silicid und/oder Sulfid, welches die folgenden Schritte umfaßt:
(A) Bereitstellen eines ersten Körperanteils, bestehend im wesentlichen aus:
(1) 5 - 100 Mol-% einer ersten Phase oder erster Phasen, ausgewählt aus der Gruppe, bestehend aus: einem Borid, Carbid, Nitrid, Silicid oder Sulfid oder deren Kombinationen aus Elementen der Gruppen 2a, 3a, 4a, 2b, 3b (einschließlich der Lanthaniden- und Actinidenreihen), 4b, 5b, 6b, 7b und 8; und
(2) 0-95 Mol-% einer zweiten Phase oder zweiter Phasen aus Metall, intermetallischer Verbindung, Legierung oder Oxid oder deren Kombinationen;
(B) Bereitstellen eines zweiten Körperanteils, bestehend im wesentlichen aus Material mit einer Phase oder mit Phasen, auswählt aus der Gruppe, bestehend aus:
Borid, Oxid, Carbid, Nitrid, Silicid oder Sulfid oder deren Kombinationen aus Elementen der Gruppen 2a, 3a, 4a, 2b, 3b (einschließlich der Lanthaniden- und Actinidenreihen), 4b, 5b, 6b, 7b und 8; einem Metall, einer Legierung, einer intermetallischen Verbindung oder Kohlenstoff oder deren Kombinationen;
(C) Bereitstellen einer Beimischung von Feststoffvorläufern, die in der Lage sind, exotherm zu reagieren, wobei die Vorläufer ausgewählt werden, um eine Verbindung in situ zwischen den ersten und zweiten Körperanteilen zu ergeben,
umfassend ein exothermes Reaktionsprodukt, ausgewählt aus der Gruppe, bestehend aus:
(1) das Produkt besteht im wesentlichen aus folgendem:
(a) 30-95 Mol-% wenigstens eines Carbids, Nitrids, Sulfids oder deren Kombinationen aus einem oder mehren der Elemente der Gruppen 2a, 3a ausschließlich B, 4a, 2b, 3b, einschließlich der Elemente der Lanthaniden- und Actinidenreihen, 4b, 5b, 6b, 7b und 8; und
(b) 5-70 Mol-% einer zweiten Phase oder zweiter Phasen eines Metalls, einer Legierung oder deren Kombinationen aus einem oder mehreren der Elemente der Gruppen 3a auschließlich von B, 4a, 1b, 2b, 4b, 5b, 6b, 7b und 8; und
(c) wobei die Verbindung weniger als etwa 4 Gew.-% Sauerstoff enthält;
(2) das Produkt besteht im wesentlichen aus folgendem:
(a) 10-90 Mol-% einer Boridphase oder von Boridphasen, wobei das Borid eine Verbindung mit einem oder mehreren der Elemente der Gruppen 3b einschließlich der Elemente der Lanthaniden- und Actinidenreihen, 4b, 5b und 6b darstellt; und
(b) 10-90 Mol-% einer Oxidphase oder von Oxidphasen, wobei das Oxid eine Verbindung mit einem oder mehreren der Elemente der Gruppen 3a, 4a, 3b, 4b, 5b, 6b und 8 darstellt; und
(3) das Produkt besteht im wesentlichen aus folgendem:
(a) 5-95 Mol-% einer Nitridphase oder Nitridphasen, wobei das Nitrid eine Verbindung mit Al oder Si oder beiden ist; und
(b) 5-95 Mol-% einer zweiten Phase oder zweiter Phasen, die ein Borid, Carbid, Silicid, Sulfid oder Kombinationen hiervon mit einem oder mehreren der Elemente der Gruppen 3b, einschließlich der Elemente der Lanthaniden- und Actinidenreihen, 4b, 5b und 6b sind, und
(c) die Verbindung weniger als etwa 4 Gew.-% Sauerstoff enthält;
(D) Laminieren dieser Mischung aus Vorläufern zwischen die Teile der zu verbindenden Festkörper, um ein Intermediat-Laminat zu bilden; und
(E) Erhitzen des Laminats unter Ausschluß atmosphärischer Reaktanten auf eine Temperatur, die ausreicht, um eine exotherme Reaktion zu initiieren, die die in situ-Verbindung erreicht und die Festkörper miteinander verbindet.

2. Verfahren nach Anspruch 1,
dadurch gekennzeichnet,
daß der Erhitzungsschritt unter Vakuum ausgeführt wird.

3. Verfahren nach Anspruch 1,
dadurch gekennzeichnet,
daß der Erhitzungsschritt in einer inerten Atmosphäre erfolgt.

4. Verfahren nach einem der Ansprüche 1 bis 3,
dadurch gekennzeichnet,
daß der Schritt (D) die Bildung einer Verbindungsschicht aus der Mischung zwischen den sich gegenüberliegenden Oberflächen der Körper umfaßt.

5. Verfahren nach einem der Ansprüch 1 bis 4,
dadurch gekennzeichnet,
daß die sich gegenüberliegenden Oberflächen vor der Ausführung des Schrittes (D) gereinigt werden.

6. Verfahren nach einem der Ansprüche 1 bis 5,
dadurch gekennzeichnet,
daß der Laminierschritt das Pressen der sich zwischen den Körpern befindenden Vorläufern bei Drücken von wenigstens 35 kg/cm², bevorzugt wenigstens 140 kg/cm² und insbesondere etwa 420 kg/cm² umfaßt.

7. Verfahren nach einem der Ansprüche 1 bis 6,
dadurch gekennzeichnet,
daß der Schritt (A) das Bereitstellen eines ersten Festkörpers, bestehend im wesentlichen aus einem TiB₂/Al-Komposit, umfaßt.

8. Verfahren nach einem der Ansprüche 1 bis 6,
dadurch gekennzeichnet,
daß der Schritt (A) das Bereitstellen eines polykristallinen, ersten TiB₂-Körpers umfaßt, Schritt (B) das Bereitstellen eines zweiten polykristallinen Alpha-Aluminiumoxid-Körpers umfaßt und Schritt (C) das Bereitstellen einer Vorläufermischung aus Borid, Carbid, Nitrid oder Silicid von Ti oder Al oder deren Mischungen umfaßt.

9. Verfahren nach Anspruch 8,
dadurch gekennzeichnet,
daß die Vorläufermischung im wesentlichen aus Al, B und TiH₂ in etwa stöchiometrischen Anteilen besteht.

10. Verfahren nach einem der Ansprüche 1 bis 9,
dadurch gekennzeichnet,
daß die ersten und zweiten Körper ausgewählt werden, um im wesentlichen aus der gleichen Phase oder den gleichen Phasen zu bestehen.

11. Verfahren nach einem der Ansprüche 1 bis 10,
dadurch gekennzeichnet,
daß das exotherme Reaktionsprodukt ausgewählt wird, um im wesentlichen aus der gleichen Phase oder den gleichen Phasen wie einer der Körper zu bestehen.

12. Verfahren nach Anspruch 11,
dadurch gekennzeichnet,
daß die Körper und das Reaktionsprodukt derart ausgewählt werden, daß das Reaktionsprodukt in beiden Körpern aus der Phase oder den Phasen besteht.

13. Verfahren nach einem der Ansprüche 1 bis 6,
dadurch gekennzeichnet,
daß der Schritt (A) das Bereitstellen eines ersten polykristallinen TiB₂-Körpers, der Schritt (B) das Bereitstellen eines metallischen zweiten Körpers und der Schritt (C) das Bereitstellen einer Vorläufermischung aus Borid, Carbid, Nitrid oder Silicid von Ti, Al, Ni oder Fe oder deren Mischungen umfaßt.

14. Verfahren nach Anspruch 13,
dadurch gekennzeichnet,
daß der Schritt (B) das Bereitstellen eines zweiten Körpers aus Stahl umfaßt.

15. Verfahren nach Anspruch 13,
dadurch gekennzeichnet,
daß der Schritt (B) das Bereitstellen eines zweiten Körpers aus Aluminium umfaßt.

16. Verfahren nach einem der Ansprüche 1 bis 6,
dadurch gekennzeichnet,
daß der Schritt (C) das Bereitstellen von Vorläufern umfaßt, ausgewählt aus der Gruppe, bestehend aus: Hydrid und Borid von Ti, Ni, Fe oder Al oder deren Mischungen.

17. Verfahren nach einem der Ansprüche 1 bis 6,
dadurch gekennzeichnet,
daß der Schritt (A) das Bereitstellen eines ersten polykristallinen TiB₂-Körpers, der Schritt (B) das Bereitstellen eines zweiten Körpers aus Siliciumnitrid und der Schritt (C) das Bereitstellen einer Vorläufermischung aus Silicid, Borid, Nitrid, Carbid oder Hydrid von Ti, Si oder B oder deren Mischungen umfaßt.

## Revendications

1. Un procédé de formation d'un corps solide assemblé comprenant un carbure, un borure, un nitrure, un siliciure et/ou un sulfure, comprenant les étapes suivantes :
(A) fournir un premier corps constitué essentiellement de :
(1) 5 à 100 mol % d'une ou plusieurs premières phases choisies dans le groupe formé par : un borure, carbure, nitrure, siliciure ou sulfure, ou une association d'entre eux, d'éléments des groupes 2a, 3a, 4a, 2b, 3b (y compris les séries des lanthanides et des actinides), 4b, 5b, 6b, 7b et 8 ; et
(2) 0 à 95 mol % d'une ou plusieurs secondes phases de métal, composé intermétallique, alliage ou oxyde, ou association d'entre eux ;
(B) fournir un second corps constitué essentiellement d'une matière ayant une ou plusieurs phases choisies dans le groupe formé par :
un borure, oxyde, carbure, nitrure, siliciure ou sulfure, ou une association d'entre eux, d'éléments des groupes 2a, 3a, 4a, 2b, 3b (y compris les séries des lanthanides et des actinides), 4b, 5b, 6b, 7b et 8 ; un métal ; un alliage ; un composé intermétallique ; ou le carbone ; ou une association d'entre eux ;
(C) fournir un mélange de précurseurs solides capables de réagir de façon exothermique, ces précurseurs étant choisis pour former "in situ" entre lesdits premier et second corps un joint comprenant un produit de réaction exothermique choisi dans le groupe formé par :
(1) le produit constitué essentiellement de :
(a) 30 à 95 mol % d'au moins un carbure, nitrure, sulfure, ou une association d'entre eux, d'un ou plusieurs éléments des groupes 2a, 3a à l'exclusion de B, 4a, 2b, 3b, y compris les éléments des séries des lanthanides et des actinides, 4b, 5b, 6b, 7b et 8 ; et
(b) 5 à 70 mol % d'une ou plusieurs secondes phases de métal, alliage, ou association d'entre eux, d'un ou plusieurs des éléments des groupes 3a à l'exclusion de B, 4a, 1b, 2b, 4b, 5b, 6b, 7b et 8 ; et
(c) ledit joint contenant moins d'environ 4 % en poids d'oxygène ;
(2) le produit constitué essentiellement de :
(a) 10 à 90 mol % d'une ou plusieurs phases de borure, consistant en borure d'un ou plusieurs des éléments des groupes 3b, y compris les éléments des séries des lanthanides et des actinides, 4b, 5b et 6b ; et
(0) 10 à 90 mol % d'une ou plusieurs phases d'oxyde, consistant en oxyde d'un ou plusieurs des éléments des groupes 3a, 4a, 3b, 4b, 5b, 6b et 8 ; et
(3) le produit constitué essentiellement de :
(a) 5 à 95 mol % d'une ou plusieurs phases de nitrure, consistant en nitrure de l'un ou chacun de Al et Si ; et
(b) 5 à 95 mol % d'une ou plusieurs secondes phases consistant en borure, carbure, siliciure, sulfure, ou une association d'entre eux, d'un ou plusieurs des éléments des groupes 3b, y compris les éléments des séries des lanthanides et des actinides, 4b, 5b et 6b ;
(c) et ledit joint contenant moins d'environ 4 % en poids d'oxygène ;
(D) stratifier ledit mélange de précurseurs entre des parties desdits corps solides à assembler pour former un stratifié intermédiaire ; et
(E) chauffer ledit stratifié en l'absence de corps réagissants atmosphériques jusqu'à une température suffisante pour amorcer une réaction exothermique qui forme ledit joint "in situ" et lie lesdits corps solides.

2. Un procédé tel que revendiqué dans la revendication 1, caractérisé en ce que l'étape de chauffage est exécutée sous vide.

3. Un procédé tel que revendiqué dans la revendication 1, caractérisé en ce que l'étape de chauffage est exécutée dans une atmosphère inerte.

4. Un procédé tel que revendiqué dans l'une quelconque des revendications 1 à 3, caractérisé en ce que l'étape (D) comprend la formation d'une couche de liaison dudit mélange entre des surfaces en opposition desdits corps.

5. Un procédé tel que revendiqué dans l'une quelconque des revendications 1 à 4, caractérisé en ce que lesdites surfaces en opposition sont nettoyées avant l'exécution de l'étape (D).

6. Un procédé tel que revendiqué dans l'une quelconque des revendications 1 à 5, caractérisé en ce que l'étape de stratification comprend le pressage desdits précurseurs entre lesdits corps à des pressions d'au moins 3,43 MPa (35 kg/cm²), de préférence d'au moins 13,7 MPa (140 kg/cm²) et en particulier d'environ 41,2 MPa (420 kg/cm²).

7. Un procédé tel que revendiqué dans l'une quelconque des revendications 1 à 6, caractérisé en ce que l'étape (A) consiste à fournir un premier corps solide constitué essentiellement d'une matière composite de TiB₂/Al.

8. Un procédé tel que revendiqué dans l'une quelconque des revendications 1 à 6, caractérisé en ce que l'étape (A) consiste à fournir un premier corps en TiB₂ polycristallin, l'étape (B) consiste à fournir un second corps en alpha-alumine polycristalline, et l'étape (C) consiste à fournir un mélange de précurseurs de borure, carbure, nitrure ou siliciure de Ti ou Al, ou de mélanges d'entre eux.

9. Un procédé tel que revendiqué dans la revendication 8, caractérisé en ce que ledit mélange de précurseurs est constitué essentiellement de Al, B et TiH₂ en proportions à peu près stoechiométriques.

10. Un procédé tel que revendiqué dans l'une quelconque des revendications 1 à 9, caractérisé en ce que lesdits premier et second corps sont choisis de manière à être constitués essentiellement de la ou des mêmes phases.

11. Un procédé tel que revendiqué dans l'une quelconque des revendications 1 à 10, caractérisé en ce que le produit de réaction exothermique est choisi de manière à être constitué essentiellement de la ou des mêmes phases que l'un desdits corps.

12. Un procédé tel que revendiqué dans la revendication 11, caractérisé en ce que lesdits corps et ledit produit de réaction sont choisis de telle manière que le produit de réaction soit constitué de la phase ou des phases présentes dans chacun desdits corps.

13. Un procédé tel que revendiqué dans l'une quelconque des revendications 1 à 6, caractérisé en ce que l'étape (A) consiste à fournir un premier corps en TiB₂ polycristallin, l'étape (B) consiste à fournir un second corps métallique, et l'étape (C) consiste à fournir un mélange de précurseurs de borure, carbure, nitrure ou siliciure de Ti, Al, Ni ou Fe, ou de mélanges d'entre eux.

14. Un procédé tel que revendiqué dans la revendication 13, caractérisé en ce que l'étape (B) consiste à fournir un second corps en acier.

15. Un procédé tel que revendiqué dans la revendication 13, caractérisé en ce que l'étape (B) consiste à fournir un second corps en aluminium.

16. Un procédé tel que revendiqué dans l'une quelconque des revendications 1 à 6, caractérisé en ce que l'étape (C) consiste à fournir des précurseurs choisis dans le groupe formé par : un hydrure et un borure de Ti, Ni, Fe ou Al, ou des mélanges d'entre eux.

17. Un procédé tel que revendiqué dans l'une quelconque des revendications 1 à 6, caractérisé en ce que l'étape (A) consiste à fournir un premier corps en TiB₂ polycristallin, l'étape (B) consiste à fournir un second corps en nitrure de silicium, et l'étape (C) consiste à fournir un mélange de précurseurs de siliciure, borure, nitrure, carbure ou hydrure de Ti, Si ou B ou de mélanges d'entre eux.
